# EUROPEAN PATENT APPLICATION

(11) **EP 4 822 309 A1**
(43) Date of publication of application: **14.10.2026**
(21) Application number: 25169743.9
(22) Date of filing: 10.04.2025
(51) Int. Cl.: G01J 3/02, G01J 3/46, G01J 3/50, G01J 3/52

(54) **COLOR MEASUREMENT DEVICE AND METHOD OF OPERATION**

(71) Applicant: X-Rite Europe GmbH, 8105 Regensdorf (CH)
(72) Inventor: Corman, Laura, CH-8105 Regensdorf (CH); Andoni, Pavllo, CH-8105 Regensdorf (CH); Denoth, Schimun, CH-8105 Regensdorf (CH); Gattiker, Felix, CH-8105 Regensdorf (CH); Ren, Daning, CH-8105 Regensdorf (CH); Ehbets, Peter, CH-8105 Regensdorf (CH); van Andel, Richard, CH-8105 Regensdorf (CH); Rauschenbach, Jörg, CH-8105 Regensdorf (CH); Burkhardt, Claudius, CH-8105 Regensdorf (CH)
(74) Representative: Detken, Andreas

(57) **Abstract**

A color measurement device (100) comprises a housing (110) defining a measurement opening (111), the housing (110) being configured to be positioned on a target surface (201) of a target (200) such that the measurement opening (111) is arranged above a target spot (202) on the target surface (201). A measurement assembly (120) is received in the housing for measuring reflectance properties of the target spot (202) through the measurement opening (111). An auxiliary camera (180) is received in the housing (110) for capturing auxiliary information, the auxiliary camera having a field of view (FOV2) that does not include the measurement opening (111).

## Description

### BACKGROUND OF THE INVENTION

The present invention relates to a color measurement device and to a method of operating a color measurement device.

When a vehicle is damaged, parts of the vehicle body may require repainting. From a customer's viewpoint, it is essential that the new paint will match the color and appearance of the existing, undamaged vehicle body.

Typically, each vehicle has a unique paint code, which is assigned by the manufacturer, to identify the original paint that was used for coating the vehicle body. Automotive paint suppliers typically maintain a database of vehicle models, paint codes, paint formulas that closely approximate the original paints, and reflectance properties associated with the paint formulas.

When a damaged vehicle enters an automotive repair shop for repair and repainting, typically a repair order is created in the computer system of the repair shop. A paint technician at the repair shop looks up the paint code of the vehicle and adds the paint code to the repair order. Instead of the paint code, other vehicle information that allows the original paint to be determined may be entered into the computer system, such as the make, model and year of the vehicle, the license plate number or the Vehicle Identification Number (VIN). In many cases, a printout of the repair order is attached to the vehicle for later reference during the repair process, and it can be necessary to enter identification information of the repair order, such as a unique identification number, into the computer system in later stages of the repair process.

Based on the vehicle information that was entered into the computer system, a search for matching paint formulas can be carried out in a paint supplier's database. To check how well the retrieved paint formulas match the color and appearance of the existing paint coating, it is common for the automotive repair shop to measure the reflectance properties of the existing paint coating. A color measurement device such as a spectrophotometer is typically used for the measurements. The measured reflectance properties can then be compared to the stored reflectance properties of the retrieved paint formula and/or to reflectance properties of a sample that has been sprayed with the retrieved paint formula. If unacceptable differences remain, the retrieved paint formula can be corrected using color formulation software.

Manually entering vehicle information such as a VIN or license plate number and identification information for a repair order into the repair shop's computer system is cumbersome and prone to error, and it is desirable to enable automated recognition of such information.

US2021034829A1 discloses an automotive color matching method implemented on a computing device. A digital image of a vehicle is captured by a camera, and the digital image of the vehicle is analyzed to determine vehicle information. The camera may be a camera of a spectrophotometer that is typically used for positioning purposes. A processor of the computing device may receive a digital image of a VIN that has been captured by the camera. The processor may apply an optical character recognition (OCR) algorithm to the VIN image in order to determine the VIN.

### SUMMARY OF THE INVENTION

It is an object of the present invention to provide a color measurement device that allows a user to capture auxiliary information such as vehicle information or information associated with repair order in a particularly convenient manner.

This object is achieved by a color measurement device as claimed in claim 1. Further embodiments of the invention are laid down in the dependent claims.

A color measurement device is provided, comprising:
a housing defining a measurement opening, wherein the color measurement device is configured to be positioned on a target surface such that the measurement opening is arranged above a target spot on the target surface;
a measurement assembly received in the housing for measuring reflectance properties of the target spot through the measurement opening; and
an auxiliary camera received in the housing for capturing auxiliary information, the auxiliary camera having a field of view that does not include the measurement opening.

The color measurement device enables a user not only to readily determine reflectance properties of a paint coating on a vehicle to be repaired by carrying out measurements through the measurement opening, but also to readily capture auxiliary information such as vehicle information or information associated with repair order using the auxiliary camera. The field of view of the auxiliary camera does not include the measurement opening. Put simply, the auxiliary camera looks at a different position than the measurement assembly that measures the reflectance properties through the measurement opening. In this manner, the properties of the auxiliary camera can be tailored to the specific needs for acquiring images of the auxiliary information and for reliably determining the auxiliary information from the images. For example, the position and viewing direction of the auxiliary camera can be tailored to ergonomic needs, and properties like focal length, field of view (FOV), focus distance, exposure time, f-number (also called f-stop) etc. of the auxiliary camera can be independently optimized to enable reliable determination of the auxiliary information from the images. These optimizations can be made independently of the needs of the measurement assembly.

A device normal can be defined for the housing of the color measurement device as an imaginary straight line extending through the measurement opening and perpendicular to the target surface when the target surface is planar and the color measurement device is positioned on the planar target surface in its intended in-use position. For ergonomic reasons, it may be preferred that the optical axis or viewing direction of the auxiliary camera and the device normal include an angle between 30° and 90°. Intuitive handling of the device is simplified if the optical axis or viewing direction of the auxiliary camera is essentially perpendicular (i.e., at an angle of about 90°) to the device normal. In other embodiments, the optical axis of the auxiliary camera may be essentially parallel to the device normal and at a distance to the device normal. Generally speaking, the position of the camera on the housing and the camera viewing direction angle should be optimized to allow a good view of the user of the display on the instrument during the positioning process.

The housing may have a generally elongated shape defining a longitudinal axis, a front end and a rear end with respect to the longitudinal axis, a bottom side, a top side and two lateral sides. The measurement opening may then be arranged at the bottom side of the housing, while the auxiliary camera may be arranged at the front side of the housing. However, other shapes of the housing are possible as well, and accordingly, it is possible for the auxiliary camera to be arranged at other locations of the housing as long as it is not covered by a user's hand in normal operation. For example, in some embodiments, the auxiliary camera may be arranged next to the measurement opening on the same side as the measurement opening.

In addition to the auxiliary camera, the measurement system may comprise a primary camera for capturing images of the target spot through the measurement opening. The primary camera may be provided, e.g., for positioning purposes and for enabling a preview of the target spot. The primary camera then advantageously has a field of view that does not overlap with the auxiliary camera's field of view.

The color measurement device may comprise an auxiliary light source for illuminating an object in the auxiliary camera's field of view. The auxiliary light source may be arranged in the housing adjacent to the auxiliary camera.

The measurement device may comprise a targeting device for projecting a marking onto the object, e.g., a light point, a light cross or a light frame, to indicate the viewing direction and/or a portion of the field of view of the auxiliary camera to the user. The targeting device may comprise a light source such as a laser diode and one or more optical components for shaping the light emitted from the light source, such as a mask that defines the shape of the marking and one or more lenses for projecting the marking onto the object.

For reasons of cost, robustness and reliability, the auxiliary camera may have a fixed focus distance. The fixed focus distance may preferably be between 100 mm and 200 mm. Such a focus distance is particularly well suited for capturing a barcode, a matrix code or alphanumeric characters on a VIN label or on a repair order but may also produce acceptable results if the auxiliary camera is used to capture a license plate number, even if a larger distance between the auxiliary camera and the license plate is used.

The color measurement device may comprise a processor and a memory device. The memory device may be a non-volatile memory device such as a flash ROM. The memory device may store instructions that, when executed by the processor, cause the processor to perform a plurality of operations. The instructions may comprise:
receiving at least one digital image of the object captured by the auxiliary camera; and
determining auxiliary information associated with the digital image, in particular, vehicle information or information associated with a repair order.

Determining the auxiliary information associated with the digital image may comprise:
processing the digital image to decode a barcode or matrix code in the digital image to determine the auxiliary information and/or
processing the digital image using optical character recognition (OCR) to determine the auxiliary information.

In some embodiments, OCR may be used to determine a vehicle's VIN. The VIN is a structured combination of characters assigned to a vehicle by the manufacturer for identification purposes. The content and structure of the VIN are standardized in ISO 3779:2009, while the location and attachment of the VIN are standardized in ISO 4030:1983. Through these standardizations, the VIN is particularly well suited to be reliably detected in an image using OCR.

In other embodiments, OCR may be used to determine a license plate number. The format of license plate numbers varies across different jurisdictions. In order to improve reliability of the OCR process, the operations performed by the processor may comprise receiving user input associated with a license plate format. For example, the user may be presented with a list of country codes and may be prompted to select one of the country codes. The processing of the digital image using OCR to determine the license plate number may then take the license plate format into account, e.g., by applying a consistency check.

The color measurement device may comprise an integrated display device. The integrated display device may be arranged at the top side of the housing. The operations performed by the processor may comprise displaying, using the display device, a preview image derived from the digital image that has been received from the auxiliary camera. Preferably, once the auxiliary information has been determined, the preview image is displayed together with the determined auxiliary information to enable a user to compare the determined auxiliary information to the digital image and to verify its correctness.

The operations performed by the processor may comprise overlaying a targeting indicator, e.g., a virtual frame, over the displayed preview image. The processing of the digital image to determine the auxiliary information may then be limited to an image portion indicated by the targeting indicator, e.g., to an image portion within the targeting indicator if the targeting indicator is a virtual frame, and/or to an image portion in a defined region around the targeting indicator.

The operations performed by the processor may comprise:
receiving user input for modifying, in particular, moving, resizing and/or rotating, the targeting indicator; and
analyzing an image portion indicated by the modified targeting indicator (in particular, within and/or around the modified targeting indicator) to determine the auxiliary information.

In addition or in the alternative, the operations performed by the processor may comprise:
receiving user input for modifying, in particular, moving, resizing and/or rotating, the digital image.

Modifying the targeting indicator may be preferred over modifying the image because it requires less computing power.

The operations may comprise automatically rotating the digital image, in particular, in steps of 90°, to align the image with a defined direction. To facilitate automatic image rotation, the color measurement device may comprise an orientation sensor (e.g., an accelerometer) to determine an orientation of the color measurement device relative to the direction of gravity, and the operations may comprise determining the orientation of the color measurement device relative to the direction of gravity using the orientation sensor and automatically rotating the digital image based on the determined orientation.

The operations performed by the processor may comprise:
receiving user input associated with a license plate layout; and
processing the digital image using optical character recognition (OCR) to determine the auxiliary information, optical character recognition taking into account the license plate layout.

The auxiliary camera may also be used for other purposes than determining vehicle information. For example, in some embodiments, the operations performed by the processor may include:
determining wireless communication information associated with the digital image, in particular, processing the digital image to decode a barcode or matrix code in the digital image that contains the wireless communication information, and
establishing a wireless communication link between the color measurement device and a wireless communication network based on the extracted wireless communication information.

In some embodiments, the operations may include:
determining user information associated with the digital image, in particular, processing the digital image to decode a barcode or matrix code in the digital image that contains the user information; and
establishing a user-specific mode of operation of the color measurement device based on the determined user information.

In some embodiments, the operations may include:
determining identification information for a calibration object associated with the digital image, in particular, processing the digital image to decode a barcode or matrix code in the digital image that contains the identification information;
measuring reflectance properties of the calibration object through the measurement opening using the measurement assembly; and
updating calibration information in the memory device based on the identification information of the calibration object and the measured reflectance properties.

The digital image captured by the auxiliary camera generally comprises an array of pixels, each pixel having at least one pixel value. For example, in a color image, each pixel value may indicate an intensity of the captured light in a particular color channel (e.g., R, G or B) at a particular pixel location. Each pixel value is generally represented by a binary number having a certain bit length. In some embodiments, the auxiliary camera outputs its pixel values in a format having a fixed first bit length (e.g. a bit length of 12 bits), while the processor expects pixel values having a second bit length that is shorter than the first bit length (e.g., a bit length of 8 bits). It may therefore be advantageous if the color measurement device comprises a bit-length reduction device for converting each pixel value that is received from the auxiliary camera ("initial pixel value") to a converted pixel value having a second bit length that is shorter than the first bit length. The bit-length reduction device may be configured to carry out a method comprising:
determining at least one statistical parameter of a frequency distribution of reference pixel values in a previously captured reference image;
defining a bitmask based on the at least one statistical parameter, the bitmask having a number of active bits that corresponds to the second bit length; and
extracting bits from each initial pixel value according to the active bits of the bitmask to form the converted pixel value.

The bitmask has a bit length that corresponds to the first bit length. Its active bits preferably indicate that a contiguous range of bits of each initial pixel value is to be extracted, the contiguous range having a length that corresponds to the second bit length. The contiguous range may exclude the most significant bit or a plurality of most significant bits of each initial pixel value. In some embodiments, the at least one statistical parameter includes a quantile of the frequency distribution of the reference pixel values, for example, a percentile such as the 95^{th} percentile. The bitmask may then indicate that a non-zero number of most significant bits of each initial pixel value is to be discarded, wherein the non-zero number is determined based on the quantile.

The proposed bit length reduction device may not only be useful for use with an auxiliary camera of a color measurement device but may be employed with any camera. Accordingly, the present invention also encompasses a bit length reduction device as defined above as such, as well as a system comprising a digital camera and a bit length reduction device as defined above.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
Fig. 1 shows an exemplary embodiment of a color measurement device in a schematic perspective view;
Fig. 2 shows a partially cut-away view of another color measurement device in Fig. 1;
Fig. 3 shows a schematic functional sketch of a color measurement device in a central longitudinal section;
Fig. 4 shows an exemplary user interface for selecting the intended kind of auxiliary information to be captured by the auxiliary camera;
Fig. 5 shows an exemplary user interface for selecting a mode of operation of the color measurement device;
Fig. 6 shows an illustration of typical locations of a VIN label on a vehicle;
Fig. 7 shows an illustration of a VIN label applied to a portion of the vehicle body below the door opening;
Fig. 8 shows an illustration of a user reading a VIN label applied to the center pillar of the vehicle body;
Figs. 9-15 show exemplary views of the display of a color measurement device in different application situations;
Fig. 16 shows an exemplary user interface for selecting a license plate format;
Fig. 17 shows an exemplary card containing a QR code for establishing a WiFi connection;
Fig. 18 shows an exemplary card containing codes associated with different users;
Fig. 19 shows an exemplary color calibration card;
Fig. 20 shows an exemplary functional diagram of a control device;
Fig. 21 shows an exemplary functional diagram of a device controller;
Fig. 22 shows an exemplary functional diagram of a camera controller;
Fig. 23 shows an exemplary functional diagram of data processing circuitry of a camera controller;
Fig. 24 shows a diagram illustrating the conversion from a 12-bit pixel value to an 8-bit pixel value according to a first strategy;
Fig. 25 shows an exemplary pixel value histogram; and
Fig. 26 shows a diagram illustrating the conversion from a 12-bit pixel value to an 8-bit pixel value according to a second strategy.

### DETAILED DESCRIPTION

### Definitions

Camera: A camera is an instrument used to capture images and/or videos. In the context of the present disclosure, a camera comprises a digital image sensor and at least one optical element for shaping, e.g., focusing, the light that is received by the image sensor.

*Field of view*: The field of view (FOV) of a camera is the angular extent of the observable world that can be captured by the camera at any given moment.

*Focus distance*: The focus distance is the distance from the focusing plane of the camera (in the context of the present disclosure, the image sensor plane) to an object that is at its sharpest focus. The focus distance is not to be confused with the focal length, which is a measure of how strongly the optical system of the camera converges light.

*Working distance*: The working distance is the distance from the frontmost element of the camera's lens and the object when the object is at its sharpest focus.

*Measurement assembly*: In the context of the present disclosure, the term "measurement assembly" refers to a group of components of a color measurement device which serve to illuminate a target spot, to capture light reflected from the target spot and to convert the captured light into corresponding electrical signals.

*Device normal*: In the context of the present disclosure, the "device normal" is an imaginary straight line which extends through the measurement opening of a color measurement device and is perpendicular to the target surface when the target surface is planar and the color measurement device is positioned on the planar target surface in its intended in-use position. In an alternative definition, the device normal may be defined as an imaginary straight line which extends through the measurement opening and is perpendicular to a measurement plane, the measurement plane being coplanar with a housing portion delimiting the measurement opening.

*Vertical*: In the context of the present disclosure, the term "vertical" is understood to mean the direction of the device normal. The vertical direction does not necessarily coincide with the direction of gravity.

*Bottom side*: The bottom side of the housing of a color measurement device is the side that contains the measurement opening.

*Barcode*: A barcode is a method of representing data in a visual, machine-readable form. A one-dimensional barcode may represent data by varying the widths, spacings, sizes and/or colors of parallel lines.

*Matrix code*: A matrix code uses a two-dimensional arrangement of structural elements such as squares, rectangles, dots or hexagons to represent data. Examples include QR codes and data matrix codes (DMCs). A matrix code may be considered a two-dimensional barcode.

*Appearance*: The term "visual appearance" or briefly "appearance" is to be understood broadly as the way in which an object reflects and transmits light, including but not limited to, how individuals viewing the object perceive color and surface texture of the object in various viewing conditions. Appearance also includes instrumented measurements of how an object reflects and transmits light.

*Bitmask*: A bitmask is a binary data structure that indicates which bits of a another data structure (in the present case, which bits of a pixel value) are to be kept ("active bits") and which bits are to be discarded ("non-active bits"). The active bits can be represented by the binary value 1 and the non-active bits by the binary value 0, or vice-versa.

### Exemplary embodiment of a color measurement device

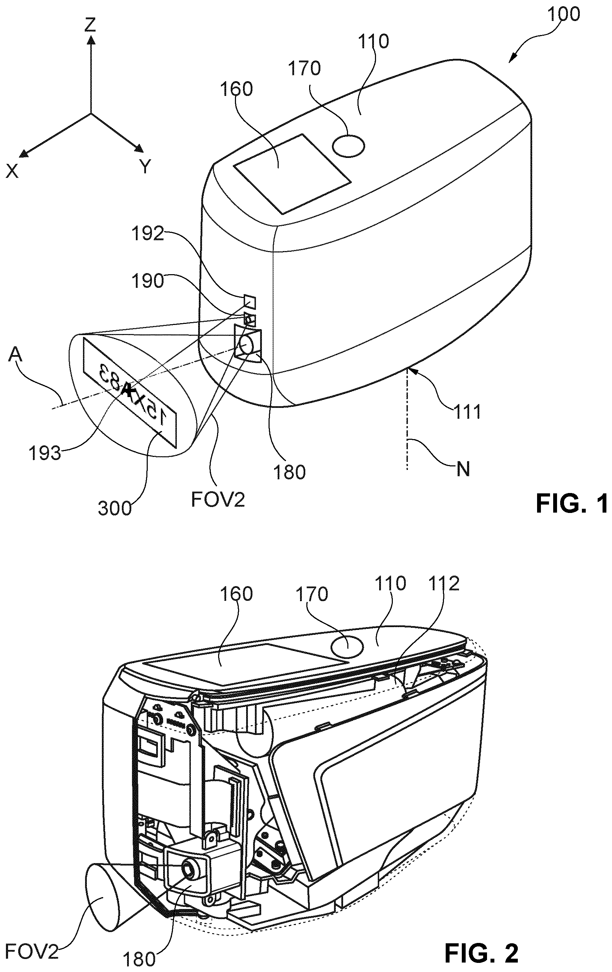

Figures 1-3 illustrate three slightly different exemplary embodiments of a color measurement device 100. The color measurement device 100 is configured as a multi-angle spectrophotometer. The color measurement device 100 comprises an elongated housing 110 defining a top side, an opposite bottom side, a front side, an opposite rear side, and two mutually opposite lateral sides. The housing 110 of the color measurement device 100 has a measuring opening 111 at its bottom side.

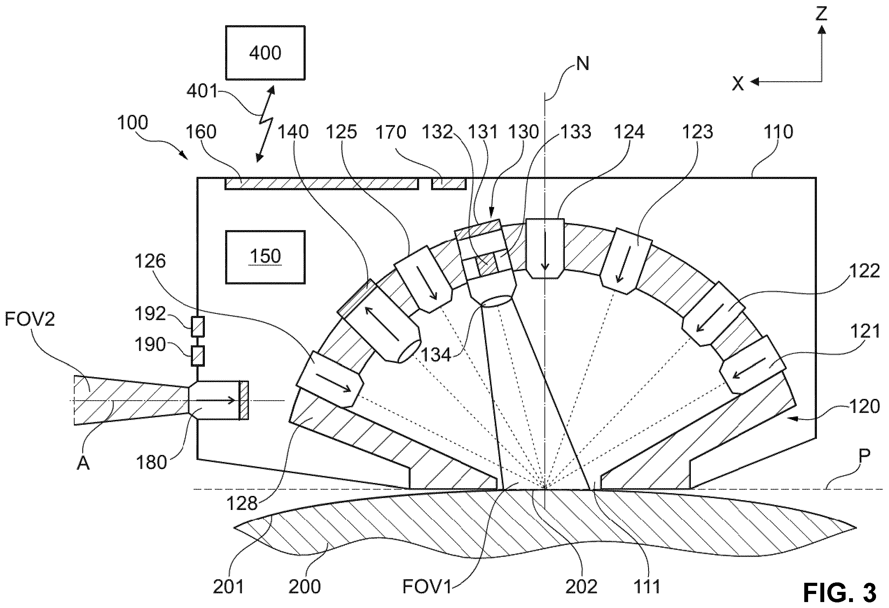

In the example illustrated in Fig. 3, the color measurement device 100 is positioned on a curved target surface 201 of a target 200 in the form of a body part of a vehicle, and the color measurement device is employed to determine the reflectance characteristics of a coating on the body part. A portion of the target surface 201 that is situated below the measurement opening 111 defines a target spot 202. The measurement opening 111 defines a measurement plane P. A device normal N extends through the center of the measurement opening 111 and is perpendicular to the measurement plane P.

Referring again to Fig. 1, a device-fixed coordinate system with coordinate axes X, Y, and Z can be defined as follows: The Z axis is parallel to the device normal N and runs from the measurement opening at the bottom side towards to the top side of the housing 110. The X axis is perpendicular to the Z axis and runs along the direction of elongation of the housing. The Y axis is perpendicular to both the X and Z axes.

A measurement assembly 120 is arranged inside the housing 110. As illustrated in Fig. 3, the measurement assembly 120 may comprise an arc-shaped base body 128, which is fixedly held in the housing 110. Various optical and photoelectric components of the measurement assembly 120 may be arranged on the base body 128. In the exemplary embodiment illustrated in Fig. 3, these components comprise six directional light sources 121, 122, 123, 124, 125, and 126 and first and second light detectors 130, 140.

In the exemplary embodiment illustrated in Fig. 3, the directional light sources 121-126 illuminate the target spot 202 below the measurement opening 111 along six different illumination directions in relation to the device normal N. Specifically, the optical axes of the directional light sources 121-126 are oriented at angles of -60°, -30°, -20°, 0°, +30° and +65° relative to the device normal N. All directional light sources 121-126 are arranged such that their optical axes lie in a common plane which contains the device normal N. This plane will in the following be referred to as the system plane. The system plane contains both the X and Z axes. Each directional light source 121-126 comprises at least one light emitter such as an LED. In some embodiments, each directional light source may comprise two or more LEDs, e.g., two white LEDs and two blue LEDs. In some embodiments, each light source may further comprise at least one optical component such as one or more lenses to create a collimated or focused beam towards the target spot 202 along a respective optical axis. In other embodiments, no such optical components are present. The light beam may be shaped by one or more baffles arranged between the light source and the measurement area.

The light detectors 130, 140 receive light reflected from the illuminated target spot 202 at viewing angles of +15° and +45° relative to the device normal N in the system plane. The first light detector 130 at angle +15° has both a spectrally resolving channel and a spatially resolving channel. For example, the first light detector 130 may comprise an entrance lens 134, a beam splitter 133, a spectrally resolving detector 131 forming the spectrally resolving channel, and an image sensor 132 forming the spatially resolving channel. The spectrally resolving detector may be, e.g., a spectrometer or in simpler cases a multi-channel sensor having a different color filter associated with each sensor channel. The beam splitter may be configured as a pinhole mirror as described in more detail in WO2022149093A1. The entrance lens 134 focuses the incoming measurement light towards the beam splitter 133. The beam splitter 133 directs part of the measurement light to the spectrometer 131 and part to the image sensor 132. The first light detector 130 thus forms a camera that includes the image sensor 132, the beam splitter 133 and the entrance lens 134. This camera will in the following be called the primary camera. The primary camera is configured to acquire images of the target spot 202. In particular, it is configured to image at least a portion of the target spot 202 in the measurement plane P onto the image sensor plane of image sensor 132. The primary camera has a field of view FOV1.

The second light detector 140 at angle +45° is a spectrally resolving detector. For example, the second light detector 140 may comprise a spectrometer, to which the measurement light may be fed by means of lenses and/or optical fibers.

In the present example, the measurement geometry is the reverse geometry of ASTM standards E2194 and E2539, in which two illuminations at 15° and 45° and six spectral channels at 0°, 30°, 65°, -20°, -30° and -60° are defined for measurements of metallic and pearlescent effect pigments.

For further details concerning a possible setup of the measurement assembly 120, reference is made to document US2014152990A1, the contents of which are incorporated herein in their entirety. While the color measurement device of the present example is equipped with six light sources and two light detectors, it is possible to use other arrangements of more or fewer light sources and light detectors. The light sources and light detectors do not necessarily need to be arranged in a common plane.

In all three embodiments illustrated in Figs. 1-3, the color measurement device 100 comprises an auxiliary camera 180. As illustrated in Fig. 1, the auxiliary camera 180 may be used to acquire images of an object 300 in the form of a VIN label, license plate or repair order printout on a vehicle. In the illustrated embodiments, the auxiliary camera 180 is arranged in the housing 110 at its front side. The auxiliary camera 180 has an optical axis A and a field of view FOV2 having the shape of a straight cone whose central axis is the optical axis A. The field of view FOV2 of the auxiliary camera does not include the measurement opening 111 and does not overlap with the field of view FOV1 of the primary camera. In the illustrated embodiments, the optical axis A of the auxiliary camera is perpendicular to the device normal N, i.e., it includes an angle of 90° with the device normal N. In other embodiments, the optical axis A and the device normal N may include an angle that is different from 90°, in particular, any angle between 0° and 90°. For ergonomic reasons it is preferred that the angle is either 0° or 90°.

For reasons of cost, robustness and reliability, the auxiliary camera 180 may be a fixed-focus camera, i.e., it does not have a user-adjustable focus or autofocus. The fixed focus distance of the auxiliary camera 180 is preferably rather small, e.g., in the range of 100 to 200 mm. A small focus distance is preferred because this ensures good digital resolution for OCR with letters having a size of a few millimeters, as it is typically the case with the alphanumeric characters of a VIN label or of a repair order printout. In addition, the position of the acquired images on the screen is less sensitive to small changes in the orientation of the color measurement device 100 than with larger focus distances. The distance between the front lens of the auxiliary camera and its focusing plane is preferably not more than 20 mm. Accordingly, the working distance of the auxiliary camera is preferably in the range of 80 mm to 200 mm.

Despite such a short focus distance, it may be possible to also capture license plate information with the auxiliary camera because the depth of field may be sufficient to resolve alphanumeric characters on a license plate even if the distance of the camera to the license plate is in the range of 500 mm to 1'000 mm. In particular, the f-number can be chosen to be sufficiently large (e.g., at least F/8) in order to ensure a sufficient depth of field.

In the embodiments illustrated in Figs. 1 and 3, an optional auxiliary light source 190 and an optional targeting device 192 are arranged in the housing 110 adjacent to the auxiliary camera 180 (these optional devices are absent in the embodiment of Fig. 2). The auxiliary light source 190 illuminates the object 300 across the field of view FOV2. The targeting device 192 projects a marking 193 onto the object 300, the marking indicating where the region of interest (ROI) of the object should be located within the field of view FOV2. For example, the marking 193 may comprise a light cross indicating the approximate center of FOV2, as illustrated in Fig. 1. In other embodiments, the marking 193 may comprise a light frame indicating an area within FOV2 in which the ROI should be located.

As apparent in Figs. 2 and 3, a battery 112 and a control device 150 may also be arranged inside the housing 110. The control device 150 is operatively connected to the battery 112, to the light sources 121-126, to the light detectors 130, 140, to the auxiliary camera 180, to the auxiliary light source 190 and to the targeting device 192. A touchscreen display 160 may be arranged in the housing 110 so as to be visible from above and is operatively connected to the control device 150 to allow visual output from the control device 150 to a user of the color measurement device 100. One or more further input devices 170, such as push buttons, may be arranged in the housing 110 and are operatively connected to the control device 150 to allow user input to be provided to the processor 150. While only a single discrete input device 170 in the form of a push button is illustrated on the top side of the housing, one or more input devices may instead or additionally be arranged in other locations, e.g. at the lateral sides of the housing 110.

### Exemplary workflow

In an exemplary method of using the color measurement device 100, a user determines color characteristics of a body part of a vehicle, using the measurement assembly 120 of the color measurement device 100, and the user determines auxiliary information that is associated with the vehicle, using the auxiliary camera 180 of the color measurement device 100. The auxiliary information may comprise, e.g., the vehicle's VIN or license plate number and/or an identifier for a repair order printout. The operations of determining color characteristics and determining auxiliary information may be carried out in arbitrary order. The determined color characteristics may subsequently be associated with the determined auxiliary information. Each of these pieces of information may be used for finding a suitable candidate paint formula that is likely to visually match the appearance of the existing paint coating on the vehicle.

For determining color information of the body part of the vehicle, the user positions the color measurement device 100 on the target surface 201 such that the measurement opening 111 is arranged above the target spot 202, as illustrated in Fig. 3, and starts a color measurement mode of the color measurement device 100, using the input device 170 and/or the touchscreen capabilities of the display 160. The control device 150 now causes the color measurement device 100 to carry out measurements of the reflectance properties of the target spot 202, using the light sources 121-127 and the light detectors 130, 140, as it is known from the prior art.

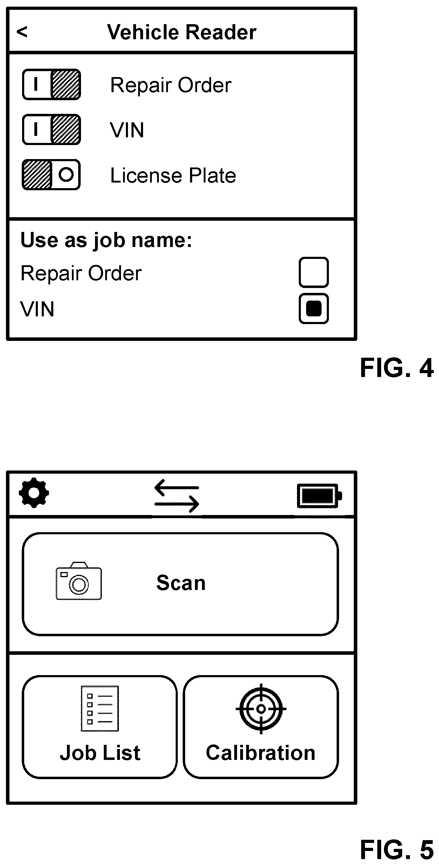

For determining the auxiliary information, the user initially selects the types of auxiliary information to be captured and determined. An exemplary user interface that may be displayed on the touchscreen display 160 for this purpose is illustrated in Fig. 4. The user selects the types of auxiliary information by moving the corresponding virtual sliders on the touchscreen display 160. In the present example, the user has selected "Repair Order" and "VIN". The user also selects which information is used to create a job name for the associated measurements. In the present example, the user has selected the VIN as the job name. The color measurement device is now ready to determine the selected types of auxiliary information.

The user then starts a "Scan" mode, as illustrated in the exemplary user interface shown in Fig. 5, and points the auxiliary camera 180 towards the object 300. The control device 150 causes the auxiliary camera 180 to continuously capture images of the object 300 and causes the display 160 to continuously display preview images derived from the captured images. The object may be illuminated with the optional auxiliary light source 190. Targeting of the auxiliary camera 180 towards the ROI on the object 300 may be facilitated by a marking 193 that is projected onto the object 300 by the optional targeting device 192.

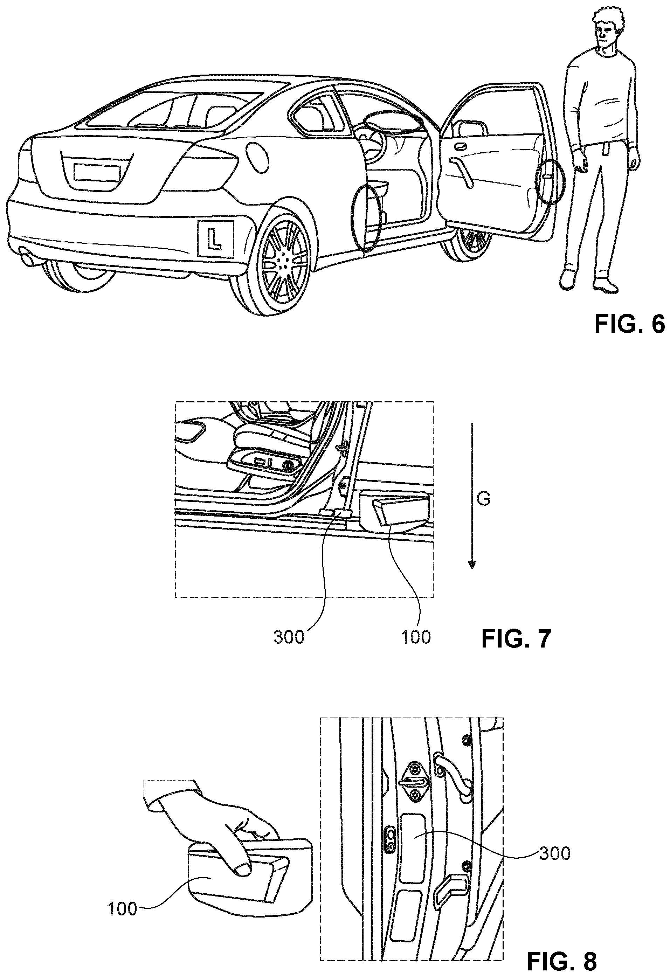

Images of the object 300 can be captured ergonomically using the color measurement device 100, even in difficult-to-reach places, thanks to the advantageous arrangement of the auxiliary camera 180. This is illustrated in Figures 6-8. Fig. 6 illustrates some typical locations of a VIN label in a vehicle. The VIN label can be located, e.g., between the dashboard and the windshield, it can be affixed to the vehicle body near the door opening, or it can be affixed to a door of the vehicle. As illustrated in Figures 7 and 8, the presently proposed arrangement of the auxiliary camera enables the user to easily and ergonomically capture images of a VIN label in various locations, even in such unfavorable locations as below the door opening (Fig. 7) or on the center pillar of the vehicle body (Fig. 8). On the other hand, the auxiliary camera may also be used to easily and ergonomically capture images of a license plate or of a repair order.

The color measurement device 100 may be configured to automatically rotate the preview images depending on the orientation of the color measurement device relative to the direction of gravity G. To this end, the color measurement device may comprise an orientation sensor that determines the angle between each of the X, Y and Z axes and the direction of gravity G. For example, when the color measurement device is held such that the Y axis is approximately parallel or antiparallel to the direction of gravity, the preview image may be rotated by +90° or -90° relative to a situation where the color measurement device is held with the Z or X axis approximately parallel to the direction of gravity, such that the preview image always appears upright for the user. In this manner, ergonomic handling of the color measurement device is improved.

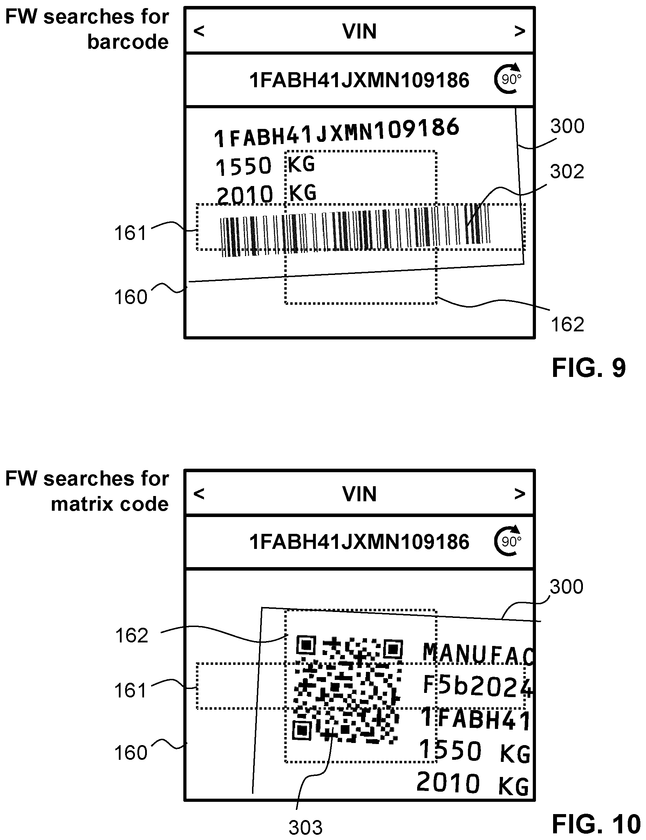

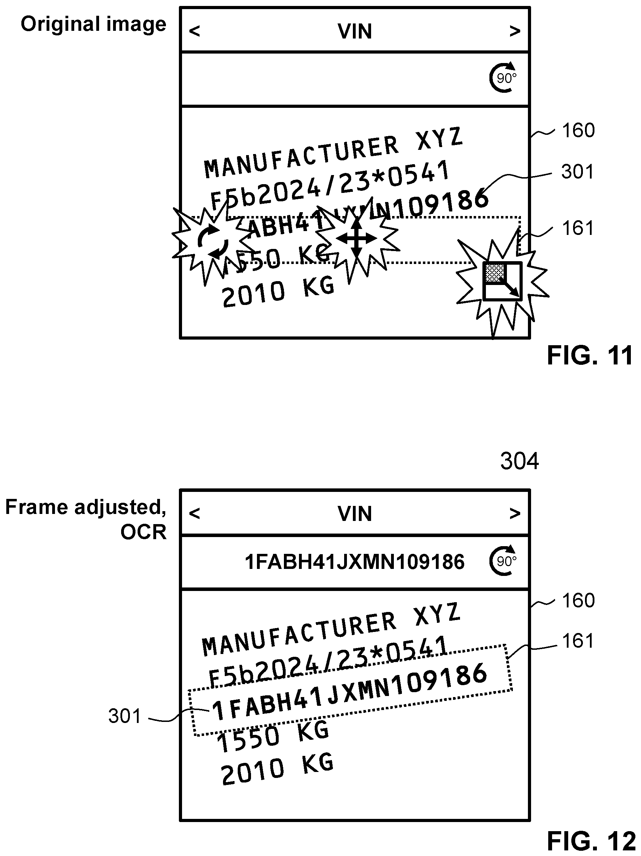

Figures 9 to 12 illustrate a VIN recognition mode, showing exemplary preview images of different VIN labels 300. The VIN recognition mode is indicated at the top of the display screen. In the example of Fig. 9, the VIN label includes a barcode 302. In the example of Fig. 10, the VIN label includes a matrix code 303, or more specifically a QR code. In the example of Fig. 11, the VIN label contains an alphanumeric code 301, i.e., a series of alphanumeric characters representing the VIN.

Overlaid over the preview images are two virtual targeting indicators in the form of virtual targeting frames 161 and 162. The first targeting frame 161 indicates to the user that the color measurement device 100 should be brought into a position such that a barcode 302 or an alphanumeric code 301 appears to be located within the first targeting frame 161. The second targeting frame 162 indicates to the user that the color measurement device 100 may alternatively be brought into a position such that a matrix code 303 appears to be located within the second targeting frame 162.

The control device 150 continuously analyzes the captured images for the presence of a barcode or a matrix code. If a barcode or matrix code is recognized, it is decoded to obtain the VIN. The determined VIN is presented to the user on the display 160 together with a preview of the analyzed image, and the user is asked to edit or confirm the VIN.

If no barcode or matrix code is recognized, the user instructs the control device 150 to temporarily store an image of the VIN label and analyze the image for the presence of an alphanumeric VIN code in targeting frame 161, using the input device 170 and/or the touchscreen capabilities of the display 160. The control device carries out an OCR algorithm to determine the VIN from the alphanumeric VIN code within targeting frame 161.

In some embodiments, the targeting frame 161 may be manually modified (moved, resized and/or rotated) by the user. This is illustrated in Figures 11 to 14. In the situation illustrated in Fig. 11, the VIN label 300 includes an alphanumeric VIN code 301; however, the VIN code is not correctly positioned within targeting frame 161. Using virtual handles displayed on the touchscreen, highlighted by stars in Fig. 11, the user may move, resize and rotate the targeting frame 161 such that is contains the VIN code 301, as illustrated in Fig. 12. The control device 150 now carries out the OCR algorithm on the region of the image that is within targeting frame 161. If OCR has been successful, this may be indicated by changing the line or background color of the targeting frame 161, e.g., from red to green, and displaying the determined VIN code 301 together with the preview image.

In alternative embodiments, the targeting frame 161 may have a fixed location, size and orientation, and the user may be able to move, resize and/or rotate the preview image instead, using the touchscreen capabilities of the display 160. This, however, requires more computing power than just adjusting the frame.

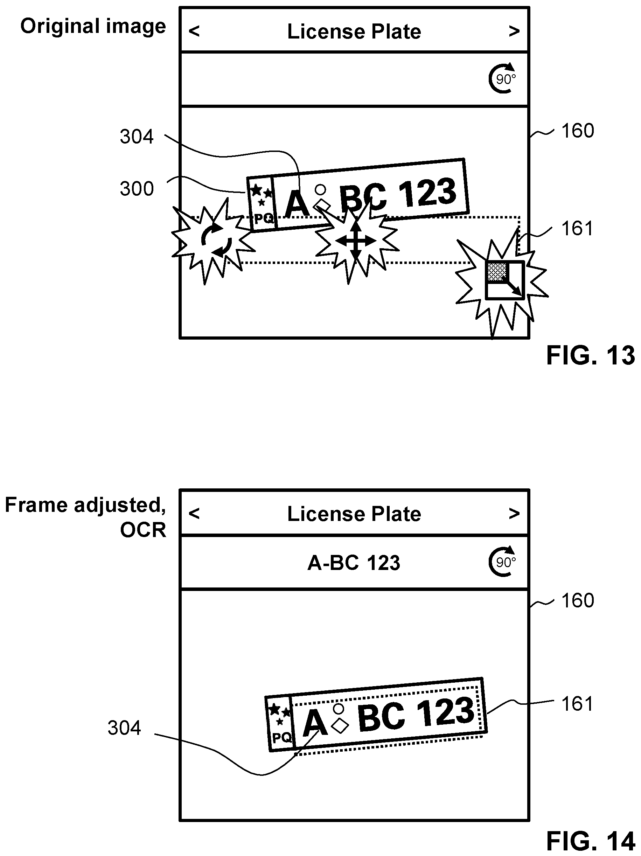

Figures 13 and 14 illustrate a similar procedure for the case where the user has selected a license plate recognition mode. The license plate recognition mode is indicated at the top of the display screen (see Fig. 13). The user captures an image of the object 300, which now is a license plate, and moves, rotates and resizes the targeting frame 161 until it contains the license plate number 304. The license plate number 304 can now be automatically recognized using OCR and displayed above the preview image (see Fig. 14).

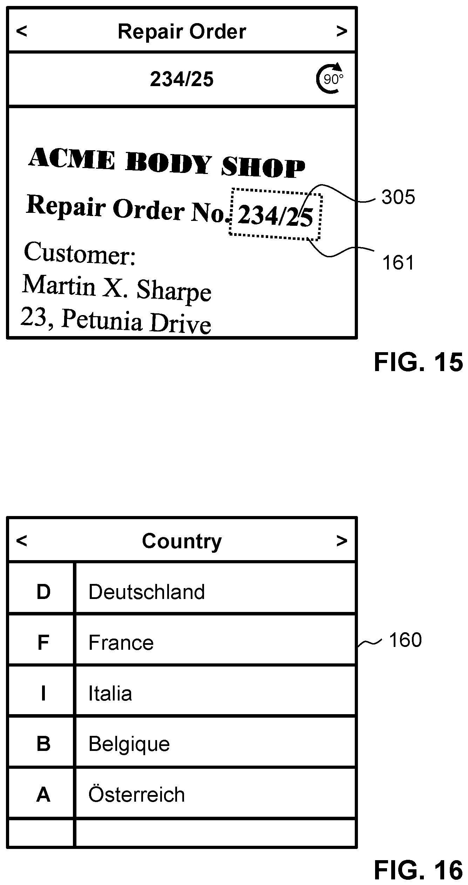

Fig. 15 illustrate the recognition of an identifier 305 for a repair order. In Fig. 15, the targeting frame 161 has already been moved, rotated and resized to contain the identifier, which has subsequently been recognized by OCR and displayed above the preview image.

The auxiliary information such as VIN, license plate number or identifier for a repair, may be associated with the measured reflectance data of the vehicle as metadata.

The format of license plates varies massively between different jurisdictions. For example, in Germany, the license plate typically starts with a blue strip on the left, featuring the European Union flag and the letter "D" for Deutschland. The license plate number contains one to three capital letter indicating the local issuing authority, followed by one or two seals, one or two further capital letters and one to four numbers, optionally followed by a capital letter indicating, e.g., whether the vehicle is electrically powered. The capital letters may contain umlauts, i.e., letters with diacritical marks, and many variants of the above principle exist. In contrast, the license plate number in Switzerland typically contains two capital letters without umlauts followed by one to six numbers. In order to improve the rate of successful recognition by OCR, the user may be prompted to indicate the type of license plate to be recognized, and the OCR algorithm may use this information. This is illustrated in Fig. 16. Here, the user is prompted to select a country or region from which the license plate originates.

### Additional uses of auxiliary camera

The auxiliary camera 180 may not only be used for determining a VIN but may be employed for other purposes as well.

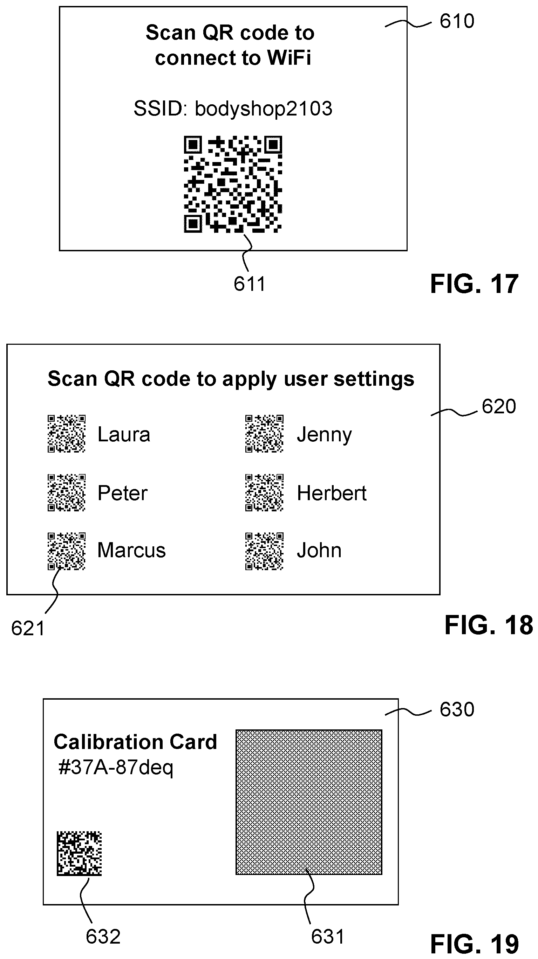

Fig. 17 illustrates a WiFi connection card 610 that contains a QR code 611 encoding connection details associated with a certain WiFi network (here: the WiFi network having the SSID "bodyshop 2103"). The WiFi network (in particular, an access point thereof) and the color measurement device 100 may be configured to allow a user to establish a connection to the WiFi network using the QR code. To this end, the user establishes a WiFi recognition mode of the color measurement device 100, using the input device 170 and/or the touchscreen capabilities of the display 160. The user captures an image of the QR code 611 using the auxiliary camera 180, and the control device 150 analyzes the image for the presence of the QR code and decodes the QR code to determine the connection details for the WiFi connection. The control device 150 then automatically communicates with the WiFi network to establish the WiFi connection, using the connection details.

Fig. 18 illustrates a user ID card 620 containing a plurality of QR codes 621, each QR code associated with a particular user of the color measurement device. 100 The color measurement device 100 may be configured to automatically load user-specific settings for a particular user, using the user-associated QR code. To this end, the user establishes a user settings mode of the color measurement device 100, using the input device 170 and/or the touchscreen capabilities of the display 160. The user captures an image of the QR code 621 using the auxiliary camera 180, and the control device 150 analyzes the image for the presence of the QR code and decodes the QR code to determine the identity of the user. The control device 150 then automatically loads user settings associated with this particular user from a non-volatile memory device of the color measurement device and/or from a remote data storage via a wireless network connection.

Fig. 19 illustrates a color calibration card 630 comprising a color patch 631 and a data matrix code (DMC) 632. The DMC 632 encodes information associated with the color calibration card 630, for example, an identifier of the color calibration card and/or color values associated with the color patch. The color measurement device 100 may be configured to automatically determine the information associated with the color calibration card, using the DMC 632. To this end, the user establishes a calibration card identification mode of the color measurement device 100, using the input device 170 and/or the touchscreen capabilities of the display 160. The user captures an image of the DMC 632 using the auxiliary camera 180, and the control device 150 analyzes the image for the presence of the DMC and decodes the DMC to determine the information associated with the color calibration card 630. A calibration routine may now be performed, using the color calibration card 630 and the determined information. To this end, the user positions the color measurement device 100 on the color calibration card 630 such that the measurement opening 111 is arranged above the color patch 631 and starts a color calibration mode using the input device 170 and/or the touchscreen capabilities of the display 160. The control device 150 now causes the color measurement device 100 to carry out measurements of the reflectance properties of the color patch 631, using the light sources 121-127 and the light detectors 130, 140, and determines calibration parameters based on the determined reflectance properties.

### Exemplary embodiment of control device

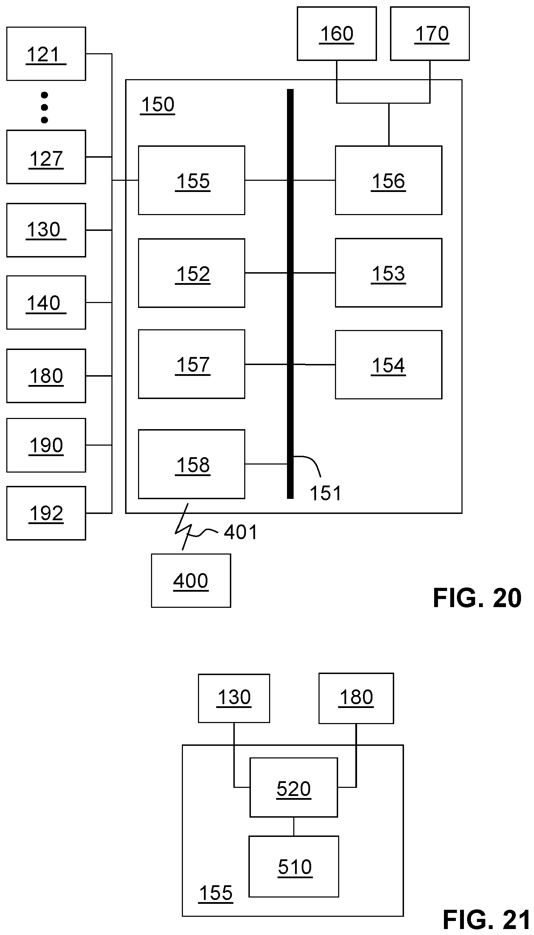

Figure 20 illustrates an exemplary embodiment of a control device 150. The control device 150 comprises a bus device 151 to which a processor 152, a random-access memory (RAM) device 153 and a non-volatile memory device 154, e.g., a flash memory device, are operatively connected.

Also connected to the bus device 151 are a device controller 155, an input/output controller 156, a 3-axis orientation sensor 157, and a wireless communication module 158. The device controller 155 serves to interface the control device 150 with the light sources 121-127, the light detectors 130, 140, the auxiliary camera 180, the auxiliary light source 190 and the targeting device 192. The input/output controller 156 serves to interface the control device 150 with the display device 160 and the input devices 170. The 3-axis orientation sensor determines the orientation of each of the device's coordinate axes X, Y, Z relative to the direction of gravity G. The wireless communication module 158 serves to establish a wireless communication link 401 with one or more external devices 400, e.g., a WiFi or Bluetooth link.

The non-volatile memory device 154 stores, inter alia, instructions that, when executed, cause the processor 152 to receive at least one digital image of the object 300 captured by the auxiliary camera 180 and to determine VIN information associated with the digital image, as discussed above. Determining the VIN information may involve the use of an external computing device 400. For example, the instructions stored in the non-volatile memory device 154 may include instructions to transmit information, e.g., at least one (possibly preprocessed) image that has been captured by the auxiliary camera 180, to the external computing device 400 for further processing and to receive processed information, e.g., VIN information obtained from the image, from the external device 400.

### Camera controller alternatively connected to primary and auxiliary cameras via switch

In some embodiments, the image sensors of the primary camera that is formed by the first measurement device 130 and of the auxiliary camera 180 may be of the same type. It is then possible to operate these image sensors using only one single camera controller. To enable multiplexing between the cameras, the color measurement device may comprise a switching device that connects the camera controller alternatively to the image sensors.

This is illustrated in Figure 21. In this example, the device controller 155 comprises a single camera controller 510 for operating both image sensors. The image sensors are alternatively connected to the device controller 155 via a switching device 520.

The camera controller 510 may be implemented, e.g., in a field-programmable gate array (FPGA) or in an application-specific integrated circuit (ASIC).

### Fast preprocessing in FPGA

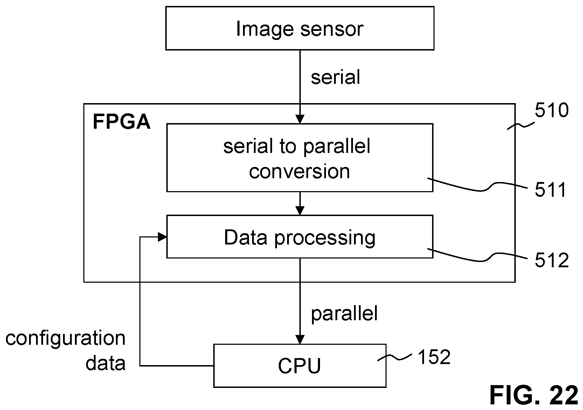

Figure 22 shows an exemplary functional diagram illustrating the manner in which the image data may be processed in the camera controller 510. The camera controller 510 may be implemented in an FPGA. A serial data stream representing pixel values is received from the image sensor via a MIPI CSI interface. The serial data stream is converted into a parallel data stream by means of a serial-to-parallel converter 511. The parallel data stream ("pixel stream") is now processed using data processing circuitry 512. The processed data stream is output to the processor 152 as a processed pixel stream. The processor 152 may analyze the processed pixel stream to determine configuration data for the data processing circuitry 512 and may change a configuration of the data processing circuitry 512 using the configuration data.

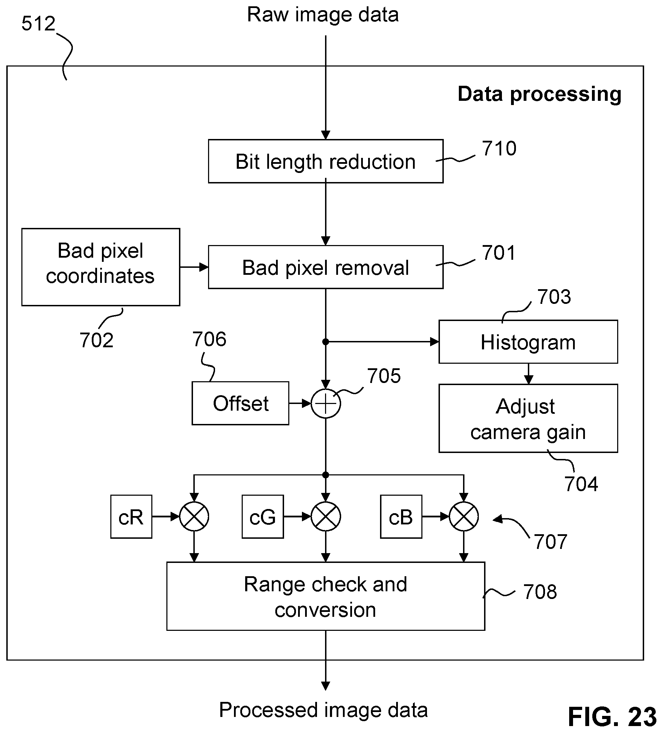

Figure 23 shows an exemplary functional diagram of data processing circuitry 512. A bit length reduction module 710 reduces the bit length of the received pixel values, as described in more detail below. A bad pixel removal module 701 removes or replaces pixel data associated with pixels known to be "bad" (e.g., hot or dead) pixels, using a table 702 that stores the coordinates of bad pixels, to remove outliers from the pixel stream. A histogram computation module 703 computes histogram data for the pixel values (e.g., statistical parameters such as mean, quantiles etc.). A gain adjustment module 704 adjusts the digital and/or analog gain and/or the integration time of the image sensor of the camera that is connected to the camera controller, using the histogram data obtained from the histogram computation module 703. In addition, the histogram data may be used for configuring the bit length reduction module 710, as described in more detail below. An offset compensation module 705 reduces a global offset of the pixel data, using a global offset value 706. A color correction module scales the pixel values in each color channel red R, green G, and blue B, using color correction factors cR, cG and cB, respectively, and possibly forms linear combinations of R, G and B pixel values (not illustrated). A range check and conversion module 708 carries out a check whether the resulting corrected pixel values are within a desired range and outputs the pixel values in a desired format for displaying, e.g., in the well-known RGB565 format, which uses 5 bits for the red and blue channels and 6 bits for the green channel. Of course, more functions can be implemented as well.

The entire data processing is carried out directly on the pixel stream in the FPGA without a need for intermediate storage of the pixel data in a RAM. As a result, the data processing pipeline causes only a very short data delay, which in practice may amount to less than 10 µs.

### Conversion from 12-bit to 8-bit values

Some image sensors have a digital resolution of, e.g., 12 bits, i.e., they provide pixel values having a bit length of 12 bits. On the other hand, the data processing circuitry or a subsequent processor may require pixel values having a bit length of, e.g., 8 bits. It may therefore be necessary to reduce the bit length of the pixel values. To this end, the data processing circuitry 512 may include the bit length reduction module 710.

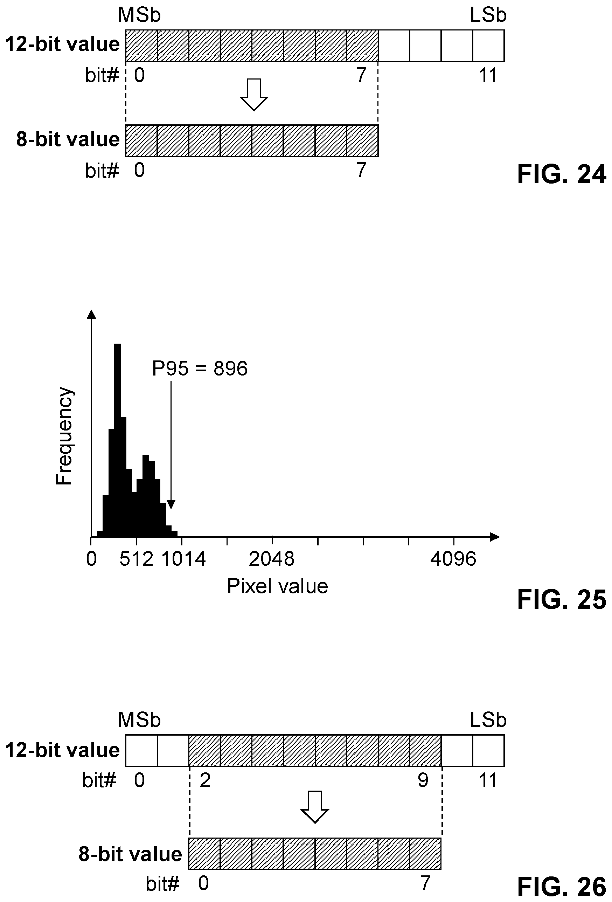

A bit length may be reduced from 12 bits to 8 bits by simply retaining the eight most significant bits and discarding the four least significant bits of the initial 12-bit values. This is illustrated in Fig. 24. A 12-bit pixel value has bit numbers 0 to 11. "MSb 0" numbering is used, i.e., bit numbering starts at zero for the most significant bit MSb and ends at 11 for the least significant bit LSb. Traditionally, the bits with numbers 0 to 7 would be retained and the bits with numbers 8 to 11 would be discarded to convert the initial 12-bit pixel value to a converted 8-bit pixel value. However, this reduces digital resolution (or, equivalently, precision) by a factor of 2⁴ = 16.

However, under low light conditions, most of the pixel values may be rather small, and sufficient digital resolution or precision may be crucial. In such a situation, another strategy for reducing the bit length of the pixel values may be advantageous, leading to a reduced loss of precision. In such a strategy, a statistical property of a frequency distribution of reference pixel values in a previously captured reference image is determined, and a bitmask is determined using the statistical property. Eight bits are then extracted from each initial 12-bit pixel value according to the bitmask to form an 8-bit pixel value. The bitmask is determined in such a manner that a large fraction of the initial pixel values will be correctly represented by the extracted 8 bits, while a loss of precision is reduced. In particular, the bitmask may comprise a contiguous range of 8 bits, the range excluding a non-zero number of most significant bits of the initial 12-bit pixel values. For example, the range may comprise the bits with numbers 1 to 8 or the bits with numbers 2 to 9 in "MSb 0" numbering.

This is illustrated in Figures 25 and 26. Figure 25 shows a histogram representing an exemplary frequency distribution of pixel values having a bit length of 12 bits. Statistical properties such as quantiles may be determined for the frequency distribution. For example, the 95^{th} percentile of the frequency distribution may be determined. In the present example, the 95^{th} percentile has the value P95 = 896, i.e., 95% of all pixel values are at or below the value of 896.

Since 896 is smaller than 2¹⁰ = 1024, at least 95% of all 12-bit pixel values can be correctly represented by their 10 least significant bits without loss of information, and their two most significant bits can safely be discarded. Discarding the two most significant bits would bring bit length down to 10 bits. To further deduce the bit length to 8 bits, the two least significant bits can be additionally discarded. In summary, this corresponds to the extraction of bits according to a bitmask whose bits with numbers 2 to 9 are active bits while the bits with numbers 0, 1, 10 and 11 are inactive bits. As a result, the bit range containing bit numbers 2 to 9 is extracted from the 12-bit pixel value to generate the 8-bit pixel value, as illustrated in Figure 26. For 12-bit pixel values of 1024 or more, whose two most significant bits are not zero, the 8-bit pixel value may simply be set to 255.

### LIST OF REFERENCE SIGNS

- 100: color measurement device
- 110: housing
- 111: measurement opening
- 112: battery
- 120: measurement assembly
- 121-126: directional light source
- 128: base body
- 130: first light detector
- 131: spectrometer
- 132: image sensor
- 133: beam splitter
- 134: entrance lens
- 140: second light detector
- 150: control device
- 151: bus device
- 152: processor / CPU
- 153: random access memory (RAM)
- 154: non-volatile memory device
- 155: device controller
- 156: input/output controller
- 157: orientation sensor
- 158: wireless communication module
- 160: display
- 161: targeting frame for barcode and text
- 162: targeting frame for matrix code
- 170: input device

- 180: auxiliary camera
- 190: auxiliary light source
- 192: targeting device
- 193: marking

- 200: target
- 201: target surface
- 202: measurement spot

- 300: object (e.g., VIN label, license plate, or repair order printout)
- 301: alphanumeric VIN code
- 302: barcode
- 303: matrix code
- 304: license plate number
- 305: identifier for repair order

- 400: remote computer
- 401: wireless communication link

- 510: camera controller
- 511: serial to parallel converter
- 512: data processing circuitry
- 520: switching device

- 610: WiFi connection card
- 611: QR code
- 620: User ID card
- 621: QR code
- 630: color calibration card
- 631: color patch
- 632: data matrix code (DMC)

- 701: bad pixel removal module
- 702: coordinate table of bad pixels
- 703: histogram computation module
- 704: gain adjustment module
- 705: offset compensation module
- 706: offset value
- 707: color correction module
- 708: range check and conversion module
- 710: bit length reduction module

- A: optical axis of auxiliary camera
- FOV1: field of view of main camera
- FOV2: field of view of auxiliary camera
- N: device normal
- P: measurement plane

## Claims

1. A color measurement device (100) comprising:
a housing (110) defining a measurement opening (111), the housing (110) being configured to be positioned on a target surface (201) of a target (200) such that the measurement opening (111) is arranged above a target spot (202) on the target surface (201);
a measurement assembly (120) received in the housing for measuring reflectance properties of the target spot (202) through the measurement opening (111); and
an auxiliary camera (180) received in the housing (110) for capturing auxiliary information, the auxiliary camera having a field of view (FOV2) that does not include the measurement opening (111).

2. The color measurement device (100) of claim 1,
wherein the housing (110) defines a device normal (N), the device normal (N) being an imaginary straight line which extends through the measurement opening (111) and is perpendicular to the target surface (201) when the target surface (201) is planar and the color measurement device (100) is positioned on the planar target surface (201),
wherein the auxiliary camera (180) defines an optical axis (A), and
wherein the optical axis (A) of the auxiliary camera (180) and the device normal (N) include an angle between 30° and 90°,
preferably, wherein the optical axis (A) of the auxiliary camera (180) is perpendicular to the device normal (N).

3. The color measurement device (100) of claim 1 or 2,
wherein the housing (110) has a generally elongated shape defining a longitudinal axis (L), a front end and a rear end with respect to the longitudinal axis (L), a bottom side, a top side and two lateral sides,
wherein the measurement opening (111) is arranged at the bottom side of the housing (110), and
wherein the auxiliary camera (180) is arranged at the front side of the housing (110).

4. The color measurement device (100) of any one of the preceding claims,
wherein the measurement assembly (120) comprises a primary camera (130) for capturing images of the target spot (202) through the measurement opening (111), and
wherein the primary camera has a field of view (FOV1) that does not overlap with the auxiliary camera's field of view (FOV2).

5. The color measurement device (100) of any one of the preceding claims, comprising:
an auxiliary light source (190) for illuminating an object (300) in the auxiliary camera's field of view (FOV2) and/or
a targeting device (192) for projecting a marking (193) onto the object (300),
wherein the auxiliary light source (190) and/or targeting device (192) is preferably arranged in the housing (110) adjacent to the auxiliary camera.

6. The color measurement device (100) of any one of the preceding claims, wherein the auxiliary camera (180) has a fixed focus distance, the fixed focus distance preferably being between 100 mm and 200 mm.

7. The color measurement device (100) of any one of the preceding claims,
comprising a processor (152) and a memory device (154), wherein the memory device (154) stores instructions that, when executed by the processor (152), cause the processor (152) to perform a plurality of operations comprising:
receiving at least one digital image of the object (300) captured by the auxiliary camera (180); and
determining auxiliary information associated with the digital image, in particular, vehicle information or information associated with a repair order.

8. The color measurement device (100) of claim 9, wherein determining the auxiliary information associated with the digital image comprises:
processing the digital image to decode a barcode (302) or matrix code (303) in the digital image to determine the auxiliary information and/or
processing the digital image using optical character recognition (OCR) to determine the auxiliary information.

9. The color measurement device (100) of claim 8,
wherein the color measurement device (100) comprises an integrated display device (160), and wherein the operations comprise displaying, using the display device (160), a preview image derived from the digital image, preferably together with the determined auxiliary information,
wherein the operations preferably further comprise:
overlaying a targeting indicator (161, 162) over the displayed preview image;
receiving user input for modifying, in particular, moving, resizing and/or rotating, the targeting indicator (161, 162); and
analyzing an image portion within the modified targeting indicator (161, 162) to determine the auxiliary information.

10. The color measurement device (100) of claim 9, wherein the operations comprise automatically rotating the digital image to align the image with a defined direction,
wherein the color measurement device (100) preferably comprises an orientation sensor (157) to determine an orientation of the color measurement device (100) relative to a direction of gravity (G), and wherein the operations preferably comprise determining the orientation of the color measurement device (100) relative to the direction of gravity (G) using the orientation sensor (157) and automatically rotating the digital image based on the determined orientation.

11. The color measurement device (100) of any one of claims 7 to 10,
wherein the operations include determining wireless communication information associated with the digital image, in particular, processing the digital image to decode a barcode or matrix code (611) in the digital image that contains the wireless communication information, and establishing a wireless communication link (401) between the color measurement device (100) and a wireless communication network based on the extracted wireless communication information, and/or
wherein the operations include determining user information associated with the digital image, in particular, processing the digital image to decode a barcode or matrix code (621) in the digital image that contains the user information, and establishing a user-specific mode of operation of the color measurement device (100) based on the determined user information, and/or
wherein the operations include determining identification information for a calibration object (630) associated with the digital image, measuring reflectance properties of a portion (631) the calibration object (630) through the measurement opening (111) using the measurement assembly (120), and updating calibration information in the memory device (154) based on the identification information of the calibration object (630) and the measured reflectance properties.

12. The color measurement device (100) of any one of the preceding claims,
wherein the digital image captured by the auxiliary camera (180) comprises an array of pixels, each pixel having an initial pixel value represented by a plurality of bits having a first bit length, and
wherein the color measurement device comprises a bit-length reduction device (710) for converting each initial pixel value to a converted pixel value having a second bit length that is shorter than the first bit length, the bit-length reduction device being configured to carry out a method comprising:
determining at least one statistical parameter of a frequency distribution of reference pixel values in a previously captured reference image;
defining a bitmask based on the at least one statistical parameter, the bitmask having a number of active bits corresponding to the second bit length; and
extracting bits from each initial pixel value according to the active bits of the bitmask to form the converted pixel value.

13. The color measurement device (100) of claim 12,
wherein the at least one statistical parameter includes a quantile of the frequency distribution of the reference pixel values, and
wherein the bitmask indicates that a non-zero number of most significant bits of each initial pixel value is to be discarded, the non-zero number being determined based on the quantile.

14. A method of using a measurement device (100) as defined in any one of the preceding claims, the method comprising:
measuring reflectance properties of a target spot (202) through the measurement opening (111) using the measurement assembly (120); and
capturing auxiliary information using the auxiliary camera (180).
